(19) Europäisches Patentamt
European Patent Office
Office européen des brevets

(11) **EP 4 538 052 B1**

(12) **EUROPEAN PATENT SPECIFICATION**

(45) Date of publication and mention of the grant of the patent:
**28.01.2026 Bulletin 2026/05**

(21) Application number: **24199413.6**

(22) Date of filing: **10.09.2024**

(51) International Patent Classification (IPC):
***B60C 1/00*** *(2006.01)* ***B60C 11/00*** *(2006.01)*
***C08L 9/06*** *(2006.01)* ***C08L 7/00*** *(2006.01)*

(52) Cooperative Patent Classification (CPC):
(C-Sets available)
**C08L 9/06; B60C 1/0016; B60C 11/005; C08L 7/00**
(Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.10.2023 JP 2023175240**

(43) Date of publication of application:
**16.04.2025 Bulletin 2025/16**

(73) Proprietor: **SUMITOMO RUBBER INDUSTRIES, LTD.**
**Kobe-shi, Hyogo 651-0072 (JP)**

(72) Inventor: **MATSUMOTO, Takuya**
**Chuo-ku, Kobe-shi, Hyogo, 651-0072 (JP)**

(74) Representative: **TBK**
**Bavariaring 4-6**
**80336 München (DE)**

(56) References cited:
**EP-A1- 3 744 776**
**JP-A- 2021 172 227**
**US-B2- 9 012 540**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 97/005, C08K 3/36, C08K 3/04, C08K 3/06;**
**C08L 9/06, C08L 7/00, C08L 9/00, C08L 97/005, C08K 3/36, C08K 3/04, C08K 3/06**

## Description

TECHNICAL FIELD

The present invention relates to tires.

BACKGROUND ART

Tires need to have wet performance and other performances for safety.

SUMMARY OF INVENTION

TECHNICAL PROBLEM

The present invention aims to solve the problem and provide tires with excellent wet performance.

SOLUTION TO PROBLEM

The present invention relates to a tire, including a multilayer tread portion including a surface rubber layer and one or more inner rubber layers located inwardly of the surface rubber layer in a tire radial direction,

> the surface rubber layer and at least one of the one or more inner rubber layers each containing a lignin-based material,
> an amount Lc (parts by mass) of the lignin-based material per 100 parts by mass of a rubber component in the surface rubber layer being equal to or larger than an amount Lb (parts by mass) of the lignin-based material per 100 parts by mass of a rubber component in the lignin-based material-containing inner rubber layer.

ADVANTAGEOUS EFFECTS OF INVENTION

The tire of the present invention includes a multilayer tread portion including a surface rubber layer and one or more inner rubber layers located inwardly of the surface rubber layer in a tire radial direction, the surface rubber layer and at least one of the one or more inner rubber layers each containing a lignin-based material, an amount Lc (parts by mass) of the lignin-based material per 100 parts by mass of a rubber component in the surface rubber layer being equal to or larger than an amount Lb (parts by mass) of the lignin-based material per 100 parts by mass of a rubber component in the lignin-based material-containing inner rubber layer. Thus, the present invention can provide tires with excellent wet performance.

BRIEF DESCRIPTION OF DRAWINGS

> FIG. 1 is a cross-sectional view showing a part of a pneumatic tire.
> FIG. 2 is an enlarged cross-sectional view showing a multilayer tread portion and its vicinity of the tire in FIG. 1.

DESCRIPTION OF EMBODIMENTS

The tire of the present invention includes a multilayer tread portion including a surface rubber layer and one or more inner rubber layers located inwardly of the surface rubber layer in a tire radial direction. The surface rubber layer and at least one of the one or more inner rubber layers each contain a lignin-based material. The amount Lc of the lignin-based material in the surface rubber layer is equal to or larger than the amount Lb of the lignin-based material in the lignin-based material-containing inner rubber layer, namely, the Lc and the Lb satisfy the relationship: $Lc \geq Lb$.

The reason for the advantageous effect of the tire described above is not exactly clear, but it is presumably as follows.

When a surface rubber layer of the tread portion contains a lignin-based material, the tread surface obtains good hydrophilicity due to the OH groups on the surface. Thus, the surface rubber layer is likely to easily conform to a wet road surface.

When the amount Lc of the lignin-based material in the surface rubber layer and the amount Lb of the lignin-based material in the inner rubber layer satisfy the relationship: $Lc \geq Lb$, deformation of the surface rubber layer caused by a grip tends to increase the friction between the OH groups in the lignin-based material and rubber molecules. Thus, energy loss

occurs in the surface rubber layer, so that grip is more likely generated.

Further, when the surface rubber layer is adjacent to the lignin-based material-containing inner rubber layer, since the lignin-based material is present in both layers, hydrogen bonding occurs between the OH groups in the lignin-based material at the interface of the layers, facilitating the transmission of force.

Consequently, a firm grip is achieved by the surface rubber layer and the inner rubber layer in the tread portion, and a reaction force is better transmitted. Presumably, the cornering performance on a wet road surface is thus improved, thereby achieving excellent wet performance.

As described above, the present invention solves the problem (aim) in improving wet performance by providing a tire with the structure satisfying the relationship "Lc ≥ Lb". In other words, the parameter of "Lc ≥ Lb" does not define the problem (aim). The problem herein is to improve wet performance. In order to solve the problem, the tire has been formulated to satisfy the parameter.

The tire includes a multilayer tread portion including a surface rubber layer and an inner rubber layer located inwardly of the surface rubber layer in the tire radial direction.

Herein, the term "surface rubber layer" refers to a rubber layer on the outermost surface side in the tire radial direction among the rubber layers constituting the multilayer tread portion.

The term "inner rubber layer" refers to one or more rubber layers located inwardly of the surface rubber layer in the tire radial direction among the rubber layers constituting the multilayer tread portion. For example, in a tread portion consisting of two rubber layers, the inner rubber layer is the rubber layer inwardly adjacent to the surface rubber layer in the tire radial direction. In a tread portion consisting of three or more rubber layers, the inner rubber layer refers to the two or more rubber layers located inwardly of the surface rubber layer in the tire radial direction. It is sufficient that the amount Lb of the lignin-based material in any lignin-based material-containing layer among the rubber layers and the amount Lc of the lignin-based material in the surface rubber layer satisfy the relationship Lc ≥ Lb or the amount Lb of the lignin-based material in each of the two or more rubber layers among the rubber layers and the amount Lb of the lignin-based material in the surface rubber layer satisfy the relationship Lc ≥ Lb.

The multilayer tread portion may be any tread consisting of two or more layers, and examples thereof include a two-layer tread, a three-layer tread, and a tread consisting of four or more layers. For example, a three-layer tread may have any of the following structures: a structure in which an outermost surface rubber layer (first layer) of the tread portion defines the surface rubber layer, and a rubber layer (second layer) inwardly adjacent to the surface rubber layer in the tire radial direction defines the inner rubber layer satisfying the relationship Lc ≥ Lb; a structure in which a rubber layer (third layer) inwardly adjacent to the second layer in the tire radial direction defines the inner rubber layer satisfying the relationship Lc ≥ Lb; and a structure in which both the second rubber layer and the third rubber layer satisfy the relationship Lc ≥ Lb. To better achieve the advantageous effect, preferred is a structure in which the amount of the lignin-based material in the first layer is equal to or larger than the amount of the lignin-based material in the second layer, and more preferred is a structure in which the amount of the lignin-based material in the first layer is equal to or larger than the amount of the lignin-based material in the second layer, and the amount of the lignin-based material in the second layer is equal to or larger than the amount of the lignin-based material in the third layer.

In the tire, the surface rubber layer is formed of a surface rubber layer composition. At least one of the one or more inner rubber layers is formed of a lignin-based material-containing inner rubber layer composition. In the case of the tire including two or more inner rubber layers, inner rubber layer(s) other than the inner rubber layer(s) each including the lignin-based material-containing inner rubber layer composition may each include the lignin-based material-containing inner rubber layer composition or an inner rubber layer composition containing no lignin-based material.

Materials commonly usable in the surface rubber layer composition and the inner rubber layer composition are described below.

The surface rubber layer composition and the inner rubber layer composition each contain a rubber component.

The rubber component contributes to cross-linking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) and number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component usable in the surface rubber layer composition and the inner rubber layer composition may be either an unmodified rubber or a modified rubber.

The modified rubber may be a rubber having a functional group interactive with filler such as silica. Examples

include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the rubber component usable in the surface rubber layer composition and the inner rubber layer composition include diene-based rubbers. Examples of diene-based rubbers include isoprene-based rubbers, polybutadiene rubber (BR), styrene-butadiene rubber (SBR), styrene-isoprene-butadiene rubber (SIBR), ethylenepropylene-diene rubber (EPDM), chloroprene rubber (CR), and acrylonitrile-butadiene rubber (NBR). Examples of the rubber component also include butyl-based rubbers and fluororubbers. Each of these may be used alone or in combinations of two or more thereof. Modified or hydrogenated products of these rubber components are also usable. Rubbers extended with oils, resins, liquid rubber components, etc. are usable as well.

The materials (monomers) of synthetic rubbers such as SBR and BR may be derived from petroleum or may be recycled from rubber products such as tires or non-rubber products such as polystyrene. Non-limiting examples of monomers obtained by recycle (recycled monomers) include butadiene derived from recycled materials and aromatic vinyls derived from recycled materials. Examples of the butadiene include 1,2-butadiene and 1,3-butadiene. Non-limiting examples of the aromatic vinyls include styrene. Of these, butadiene derived from recycled materials (recycled butadiene) and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

The raw materials (monomers) of a synthetic rubber such as SBR or BR may be derived from biomass. Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these. Examples of the biomass resources of the monomers include sugar, wood, plant residues after collecting useful components, plant-derived ethanol, and biomass naphtha.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the $^{14}C$ content of a sample to that of a modern carbon standard (modern standard reference). This value is used as an index indicative of the biomass ratio of a compound (rubber). The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, etc., all the $^{14}C$ atoms which had been contained in the plants etc. at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$

atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the percentages (biomass ratios) of compounds derived from natural resources (compounds derived from biomass resources) in a compound (rubber).

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass (natural materials) is expected to have about 110 pMC although there are some differences such as regional differences (currently, such materials often fail to exhibit a value of 100 in usual conditions). On the other hand, the $^{14}C$ content of chemical materials derived from fossil fuels, such as petroleum, measured is expected to be substantially 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

To better achieve the advantageous effect, the surface rubber layer composition preferably contains an isoprene-based rubber, more preferably contains an isoprene-based rubber and BR and/or SBR, still more preferably contains an isoprene-based rubber, BR, and SBR.

The inner rubber layer composition preferably contains at least one of an isoprene-based rubber and BR, more preferably contains an isoprene-based rubber and BR.

The mechanism of how the surface rubber layer composition containing an isoprene-based rubber provides a better advantageous effect is not exactly clear. Presumably, mixing a OH group-containing lignin-based material with an isoprene-based rubber allows the tread surface to have better hydrophilicity, whereby the advantageous effect can more likely be achieved. Therefore, the wet performance is presumably improved significantly.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone or in combinations of two or more thereof.

The amount of the isoprene-based rubber based on 100% by mass of the rubber component in the surface rubber layer composition is preferably 5% by mass or more, more preferably 20% by mass or more, still more preferably 30% by mass or more, while it is preferably 70% by mass or less, more preferably 50% by mass or less, still more preferably 40% by mass or less. When the amount is within the range indicated above, the advantageous effect tends to be better achieved.

The amount of the isoprene-based rubber based on 100% by mass of the rubber component in the inner rubber layer composition is preferably 40% by mass or more, more preferably 60% by mass or more, still more preferably 70% by mass or more, while it is preferably 95% by mass or less, more preferably 85% by mass or less, still more preferably 80% by mass or less. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). Each of these may be used alone or in combinations of two or more thereof. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {$\Sigma$(amount of each BR $\times$ cis content of the each BR) }/amount of total BR. For example, when 100% by mass of rubber components include 20% by mass of BR having a cis content of 90% by mass and 10% by mass of BR having a cis content of 40% by mass, the average cis content of the BR is 73.3% by mass (= $(20 \times 90 + 10 \times 40)/(20 + 10)$).

The BR may be either unmodified or modified BR. Examples of the modified BR include those into which the

functional groups listed for the modified rubbers have been introduced. The BR may also be hydrogenated polybutadiene polymers (hydrogenated BR).

The amount of BR based on 100% by mass of the rubber component in the surface rubber layer composition is preferably 5% by mass or more, more preferably 20% by mass or more, still more preferably 30% by mass or more, while it is preferably 70% by mass or less, more preferably 50% by mass or less, still more preferably 40% by mass or less. When the amount is within the range indicated above, the advantageous effect tends to be better achieved.

The amount of BR based on 100% by mass of the rubber component in the inner rubber layer composition is preferably 5% by mass or more, more preferably 20% by mass or more, still more preferably 30% by mass or more, while it is preferably 70% by mass or less, more preferably 50% by mass or less, still more preferably 40% by mass or less. When the amount is within the range indicated above, the advantageous effect tends to be better achieved.

Any SBR may be used. Examples include emulsionpolymerized styrene-butadiene rubbers (E-SBR) and solutionpolymerized styrene-butadiene rubbers (S-SBR). Each of these may be used alone or in combinations of two or more thereof.

The styrene content of the SBR is preferably 5% by mass or higher, more preferably 20% by mass or higher, still more preferably 23.5% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR) }/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25) / (85 + 5)).

The vinyl content of the SBR is preferably 30% by mass or higher, more preferably 40% by mass or higher, still more preferably 50% by mass or higher. The vinyl content is preferably 70% by mass or lower, more preferably 65% by mass or lower, still more preferably 60% by mass or lower. When the vinyl content is within the range indicated above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass) }/{75 × (100 (% by mass) - 40 (% by mass)) + 15 × (100 (% by mass) - 25 (% by mass))}.

The SBR may be either unmodified or modified SBR. Examples of the modified SBR include those into which the functional groups listed for the modified rubbers have been introduced. The SBR may also be hydrogenated styrene-butadiene copolymers (hydrogenated SBR).

The amount of SBR based on 100% by mass of the rubber component in the surface rubber layer composition is preferably 15% by mass or more, more preferably 30% by mass or more, still more preferably 40% by mass or more, while it is preferably 80% by mass or less, more preferably 60% by mass or less, still more preferably 50% by mass or less. When the amount is within the range indicated above, the advantageous effect tends to be better achieved.

The amount of SBR based on 100% by mass of the rubber component in the inner rubber layer composition is preferably 20% by mass or less, more preferably 10% by mass or less, still more preferably 5% by mass or less, and may be 0% by mass. When the amount is within the range indicated above, the advantageous effect tends to be better achieved.

The surface rubber layer composition contains a lignin-based material as a filler. The inner rubber layer composition may contain a lignin-based material as a filler.

Herein, the term "lignin-based material" includes lignin and materials derived from lignin (hereinafter, also referred to as lignin derivatives).

To better achieve the advantageous effect, the lignin derivatives are desirable.

The nitrogen adsorption specific surface area ($N_2SA$) of the lignin-based material is preferably 50 $\mu m^2/g$ or more, more preferably 70 $\mu m^2/g$ or more, still more preferably 90 $\mu m^2/g$ or more, further more preferably 110 $\mu m^2/g$ or more, particularly preferably 123 $\mu m^2/g$ or more. The $N_2SA$ is preferably 300 $\mu m^2/g$ or less, more preferably 250 $\mu m^2/g$ or less, still more preferably 200 $\mu m^2/g$ or less. When the $N_2SA$ is within the range indicated above, the advantageous effect tends to be better achieved.

The $N_2SA$ of the lignin derivatives is also desirably within the range indicated above.

Herein, the nitrogen adsorption specific surface area of the lignin-based material is determined in accordance with JIS K 6217-2:2001.

In the tire, the amount Lc (parts by mass) of the lignin-based material per 100 parts by mass of the rubber component in the surface rubber layer composition is equal to or larger than the amount Lb (parts by mass) of the lignin-based material per 100 parts by mass of the rubber component in the lignin-based material-containing inner rubber layer composition ($Lc \geq Lb$).

A ratio Lc/Lb is preferably 1.6 or higher, more preferably 1.7 or higher, still more preferably 2.0 or higher, further more preferably 5.0 or higher, further more preferably 6.0 or higher, particularly preferably 6.6 or higher. The ratio Lc/Lb is preferably 15.0 or lower, more preferably 12.0 or lower, still more preferably 11.7 or lower, further more preferably 9.0 or lower, further more preferably 7.0 or lower, particularly preferably 6.5 or lower. When the ratio is within the range indicated above, the advantageous effect tends to be better achieved.

The amount Lc of the lignin-based material per 100 parts by mass of the rubber component in the surface rubber layer composition is preferably 3 parts by mass or more, more preferably 5 parts by mass or more, still more preferably 15 parts by mass or more, particularly preferably 20 parts by mass or more, while it is preferably 50 parts by mass or less, more preferably 40 parts by mass or less, still more preferably 35 parts by mass or less, particularly preferably 30 parts by mass or less. When the amount is within the range indicated above, the advantageous effect tends to be better achieved.

The amount of the lignin derivatives is also desirably within the range indicated above.

With regard to the inner rubber layer composition, the amount Lb of the lignin-based material per 100 parts by mass of the rubber component in the lignin-based material-containing inner rubber layer composition is preferably 1 part by mass or more, more preferably 2 parts by mass or more, still more preferably 3 parts by mass or more, while it is preferably 10 parts by mass or less, more preferably 7 parts by mass or less, still more preferably 5 parts by mass or less. When the amount is within the range indicated above, the advantageous effect tends to be better achieved.

The amount of the lignin derivatives is also desirably within the range indicated above.

The lignin-based material content of fillers (100% by mass) in the surface rubber layer composition is preferably 5.8% by mass or higher, more preferably 15.0% by mass or higher, still more preferably 18.0% by mass or higher, particularly preferably 20.0% by mass or higher, while it is preferably 50.0% by mass or lower, more preferably 40.0% by mass or lower, still more preferably 30.5% by mass or lower, further more preferably 30.0% by mass or lower. When the content is within the range indicated above, the advantageous effect tends to be better achieved.

The lignin derivative content is also desirably within the range indicated above.

With regard to the inner rubber layer composition, the lignin-based material content of fillers (100% by mass) in the lignin-based material-containing inner rubber layer composition is preferably 3.0% by mass or higher, more preferably 4.0% by mass or higher, still more preferably 5.0% by mass or higher, further more preferably 5.3% by mass or higher, particularly preferably 5.6% by mass or higher, while it is preferably 10.0% by mass or lower, more preferably 8.0% by mass or lower, still more preferably 6.5% by mass or lower. When the content is within the range indicated above, the advantageous effect tends to be better achieved.

The lignin derivative content is also desirably within the range indicated above.

The lignin derivatives may be any material synthesized from lignin. To better achieve the advantageous effect, for example, fine carbon particles obtained from an organic raw material containing lignin as a main component described in JP 2009-155199 A can suitably be used.

The fine carbon particles can suitably be produced by any of the following production methods (1) to (5).

(1) A method for producing fine carbon particles in which a solution of an organic raw material containing lignin as a main component is formed into fine droplets, then the fine droplets are dried to prepare fine particles, and the fine particles are thermally decomposed at a temperature in the range of 300°C to 1200°C, thereby producing fine carbon particles.

(2) A method for producing fine carbon particles in which a mixed solution of an organic raw material containing lignin as a main component and an inorganic substance is formed into fine droplets, then the fine droplets are dried to prepare fine particles, and the fine particles are thermally decomposed at a temperature in the range of 300°C to 1200°C, thereby producing fine carbon particles.

(3) A method for producing fine carbon particles in which a mixed solution of an organic raw material containing lignin as a main component and a basic compound is formed into fine droplets, then the fine droplets are dried to prepare fine

particles, and the fine particles are thermally decomposed at a temperature in the range of 300°C to 1200°C to increase the specific surface area thereof, thereby producing fine carbon particles

(4) A method for producing fine carbon particles in which a pulp waste liquid is pretreated to increase the lignin component content, the pretreated pulp waste liquid is formed into fine droplets, then the fine droplets are dried to prepare fine particles, and the fine particles are thermally decomposed at a temperature in the range of 300°C to 1200°C, thereby producing fine carbon particles.

(5) A method for producing fine carbon particles in which a pulp waste liquid is pretreated to increase the lignin component content, a solution prepared by adding an inorganic substance to the pretreated pulp waste liquid is formed into fine droplets, then the fine droplets are dried to prepare fine particles, and the fine particles are thermally decomposed at a temperature in the range of 300°C to 1200°C, thereby producing fine carbon particles.

In the production methods, examples of the organic raw material containing lignin as a main component include lignin, organic matters in a waste liquid discarded in paper pulp production or organic matters in a pretreated product of the waste liquid, and pretreated products of lignin-containing plant raw materials such as wood and plants. Lignin is a high molecular weight aromatic polymer compound that is present in wood at 20 to 30% by mass and constitutes an intermediate layer between cell membranes. A portion of the lignin is considered to be present in the cell membranes. Various methods to isolate lignin from plant bodies are known and can be used. Specific examples of the lignin include alkali lignin, hydrolyzed lignin, and lignin sulfonate.

The pretreatment in the production methods is performed to increase the lignin content of a lignin-containing organic raw material or to refine lignin to have a structure suitable for producing fine carbon particles. The pretreatment is performed before the formation of fine droplets of the lignin-containing organic raw material. For example, when a pulp waste liquid is used as an organic raw material, the pretreatment is preferably performed to increase the lignin component content. Specific examples of the pretreatment include (1) precipitating lignin by allowing lignin to absorb acid gas and separating the precipitated lignin, (2) precipitating lignin by adding an inorganic acid, a multivalent cation, or an organic amine and separating the precipitated lignin, (3) fermenting saccharides in a pulp waste liquid to decompose and remove them, and (4) isolating and collecting high molecular weight lignin by ultrafiltration. Examples of usable ultrafiltration membranes include porous membranes with a pore size ranging from 1 to 100 nm.

In the production methods, examples of the pretreatment using an organic raw material such as wood or a plant include known methods such as alkali decomposition used in pulp production. Moreover, the lignin component content can be increased by performing isolation and condensation of the lignin, if necessary. Examples of the pretreatment also include: isolating and collecting high molecular weight lignin by ultrafiltration; and allowing a pulp waste liquid to absorb carbon dioxide to lower the hydrogen ion index so that a portion of the organic component is precipitated and then collecting the organic component from the solution.

The thermal decomposition in the production methods is performed by heating the lignin-containing organic raw material at 300°C to 1200°C to carbonize the material. Generally, the thermal decomposition is performed at 500°C to 800°C.

Examples of the inorganic substance in the production methods include carbon as a single substance; oxides, hydroxides, carbonates, and halides of metals, and water soluble salts of metals such as metal sulfate, metal nitrate, metal silicate, metal phosphate, and metal borate; fine particles of the substances; and fine fibers of the substances. Preferred among these are a metal compound including at least one selected from the group consisting of oxides, hydroxides, carbonates, and halides of metals. When such a metal compound is used, as the proportion of the metal compound added increases, the thickness of the carbon wall of the fine carbon particles decreases. Based on this nature, the thickness of the carbon wall of the fine carbon particles can be controlled by varying the proportion of the metal compound added.

In the production methods, the phrase "formed into fine droplets" means, for example, that the pulp waste liquid after the pretreatment is formed into fine droplets with a diameter of about several tens of micrometers or less by spraying, ultrasonic atomization, or another technique.

In the production methods, preferably, the fine carbon particles obtained during or after the thermal decomposition are brought into contact with a low reactive gas before the fine carbon particles are taken out into the air, so that the surfaces of the fine carbon particles are reacted with the gas and deactivated. Thus, rapid heat generation of the fine carbon particles can be suppressed when they are taken out into the air. Examples of the low reactive gas include water vapor and nitrogen gas with a low oxygen content. Since a slow reaction with the surfaces of the carbon particles must occur, a completely inert gas such as pure nitrogen is not applicable.

The fine carbon particles obtained in the production methods are particles in which the lignin in the organic matter is thermally decomposed or carbonated. The fine carbon particles include particles with various sizes (diameter ranges from several nanometers to about 50 μm) and shapes. The fine carbon particles have a bulk density of, for example, 3 to 300 g/L and have a light weight.

Hollow fine carbon particles can also be produced by the production methods.

For example, the hollow fine carbon particles have an outer diameter of 0.2 to 50 μm and a carbon wall thickness

of 0.05 to 20 μm.

For example, the hollow fine carbon particles have a mass ratio of the lignin and the basic compound of 1:0.5 to 1:2.

For example, the hollow fine carbon particles have a mass ratio of the lignin and the metal compound of 1:3 to 1:20.

For example, hollow fine carbon particles such as those having an outer diameter of 0.2 to 50 μm and a carbon wall thickness of 0.05 to 20 μm or those consisting of caron nanopipes with a carbon wall having an outer diameter of 5 to 50 nm and a carbon wall thickness of 1 to 5 nm can be produced by forming a solution containing lignin and a metasilicate into fine droplets, drying the fine droplets to prepare fine particles, and thermally decomposing the fine particles at a temperature within the range of 300°C to 1200°C.

Here, the mass ratio of the lignin and the metasilicate is 1:3 to 1:20.

Moreover, hollow non-graphitic fine carbon particles having an outer diameter of 3 to 30 nm, a carbon wall thickness of 1 to 5 nm, and a specific surface area of 1400 to 1600 $m^2/g$ can be produced by forming a solution containing lignin and olthosilicate into fine droplets, drying the fine droplets to prepare fine particles, and thermally decomposing the fine particles at a temperature within the range of 300°C to 1200°C.

Here, the mass ratio of the lignin and the olthosilicate is 1:5 to 1:20.

Specifically, for example, hollow fine carbon particles having a diameter of several micrometers to about 10 μm can be produced by spray drying an aqueous solution with a 5% total concentration of lignin sulfate to prepare lignin sulfate fine particles, thermally treating the fine particles in a nitrogen atmosphere at 600°C for one hour, and naturally cooling the resulting particles.

Hollow fine carbon particles can also be produced by spray drying an aqueous solution with a 5% total concentration of lignin and sodium hydroxide contained at a mass ratio of 1:0.25 to prepare composite fine particles, thermally treating the composite fine particles in a nitrogen atmosphere at 600°C for one hour, naturally cooling the resulting particles, washing the cooled particles with water, and drying the washed particles. Moreover, hollow fine carbon particles can be produced by performing the above-described treatment using an aqueous solution with a 5% total concentration of lignin and sodium hydroxide contained at a mass ratio of 1:0.5. Further, hollow fine carbon particles can be produced by performing the above-described treatment using an aqueous solution with a 5% total concentration of lignin and sodium hydroxide contained at a mass ratio of 1:1.

To better achieve the advantageous effect, for example, the lignin derivatives may suitably be lignin derivatives obtained by hydrothermal carbonization of lignin described in JP 6704475 B.

The lignin treated by hydrothermal carbonization can be produced from a lignin-containing material.

Examples of the lignin-containing material include plant lignin such as coniferous wood (gymnosperm) lignin, broadleaf wood (angiosperm) lignin, and annual plant (herbaceous) lignin.

The polymer conformation of lignin can be broken by hydrothermal carbonization (treatment by hydrothermal carbonization) of the lignin. The hydrothermal carbonization includes, for example, a step of obtaining a lignin-containing material and a step of treating the lignin-containing material in the state of an aqueous suspension at a high temperature and a high pressure. Thus, in the hydrothermal carbonization, a part of the lignin-containing material in a liquid state is thermally decomposed. The hydrothermal carbonization converts the lignin-containing material into a lignin derivative with a substantially uniform quality that contains a functional group.

The lignin-containing material can be at least partially purified by the hydrothermal carbonization. Generally, lignin is at least partially carbonized. During the hydrothermal carbonization, the lignin is surrounded by water. The degree of decomposition of the lignin by the hydrothermal carbonization can be controlled by appropriately selecting the temperature, the pressure, the pH of the aqueous suspension, etc. The reaction conditions of the hydrothermal carbonization of the lignin can be appropriately selected, whereby lignin derivatives with predetermined properties can be produced. Examples of the reaction conditions include pH, pressure, maximum temperatures of fed materials, and residence time.

The hydrothermal carbonization can be performed in a reactor. For example, the reactor may be a batch reactor. The hydrothermal carbonization of the lignin can be performed while controlling the inner pressure of the reactor to allow the water in the reactor to be continuously in a liquid state during the hydrothermal carbonization. The inner pressure of the reactor during the hydrothermal carbonization reaction is, for example, 10 to 40 bar, preferably 15 to 40 bar. The temperature of the lignin-containing aqueous suspension in the hydrothermal carbonization is desirably controlled such that the lignin begins to disintegrate into small fragments. The temperature of the hydrothermal carbonization reaction is preferably 150°C or higher, while it is preferably 300°C or lower, more preferably 250°C or lower. Here, the temperature of the hydrothermal carbonization reaction refers to the temperature of the aqueous suspension in the reactor during the hydrothermal carbonization reaction.

In the hydrothermal carbonization, the pH of the lignin-containing aqueous suspension is desirably controlled. The solubility of the suspension is high under alkali conditions. The pH of the lignin-containing suspension in the hydrothermal carbonization affects the particle size of a lignin derivative to be formed. The pH of the lignin-containing

suspension is controlled to be preferably more than 7, more preferably more than 8. The pH of the lignin-containing aqueous suspension can be controlled before the hydrothermal carbonization. Polymerization of lignin in an alkali suspension is suppressed usually at a pH of 10 or more. The particle size of a lignin derivative to be formed is affected by the pH during the hydrothermal carbonization. In the hydrothermal carbonization, the hydrogen ion concentration of the lignin-containing aqueous suspension is desirably reduced before the hydrothermal carbonization to decrease the particle size of a lignin derivative to be formed. The hydrothermal carbonization is desirably performed while the hydrogen ion concentration of the lignin-containing aqueous suspension is increased before the hydrothermal carbonization to increase the particle size of a lignin derivative to be formed. The particle size of the lignin derivative refers to an average particle size after the hydrothermal carbonization.

The hydrothermal carbonization can produce a lignin derivative containing a functional group. Examples of the functional group include a hydroxyl group, a carboxyl group, a methoxy group, and a phenolic hydroxyl group.

The hydrothermal carbonization can enrich the carbon content of the lignin. The carbon content of the lignin can be enriched by dehydration, decarboxylation, etc. Dehydration is superior at low temperature, while decarboxylation is superior at high temperature. At a higher temperature, both the dehydration and decarboxylation reactions rapidly proceed. Therefore, the hydrothermal carbonization of the lignin is desirably performed at a high reaction temperature.

Due to the hydrothermal carbonization, the surface active functional groups of the fed lignin derivative can be maintained to at least a certain degree. Thus, the lignin derivative to be produced contains functional groups that can bind to other compounds by chemical reactions, whereby a material containing relatively a large amount of functional groups can be provided. The amount of the functional groups is generally remarkably higher than that of carbon black, for example.

The surface rubber layer composition and the inner rubber layer composition may each contain a filler other than the lignin-based material.

Such a filler is not limited and may be a material known in the rubber field. Examples include inorganic fillers such as carbon black, silica, calcium carbonate, talc, alumina, clay, aluminum hydroxide, aluminum oxide, and mica; bio char; and hard-to-disperse fillers. Carbonderived fillers (carbon-containing fillers) such as carbon black and silica are preferred among these. A filler may be used alone, or two or more fillers may be used in combination.

To better achieve the advantageous effect, the surface rubber layer composition preferably contains at least one of carbon black and silica and more preferably contains both carbon black and silica.

To better achieve the advantageous effect, the inner rubber layer composition preferably contains at least one of carbon black and silica, more preferably contains carbon black, and still more preferably contains both carbon black and silica.

To better achieve the advantageous effect, the lignin-based material-containing inner rubber layer composition preferably contains at least one of carbon black and silica, more preferably contains carbon black, and still more preferably contains both carbon black and silica.

Non-limiting examples of carbon black usable in the surface rubber layer composition and the inner rubber layer composition include N134, N110, N220, N234, N219, N339, N330, N326, N351, N550, and N762. The material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by the thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. Each carbon black may be used alone or in combinations of two or more thereof.

The nitrogen adsorption specific surface area ($N_2SA$) of the carbon black is preferably 50 $m^2/g$ or more, more preferably 80 $m^2/g$ or more, still more preferably 100 $m^2/g$ or more. The $N_2SA$ is preferably 150 $m^2/g$ or less, more preferably 130 $m^2/g$ or less, still more preferably 120 $m^2/g$ or less. When the $N_2SA$ is within the range indicated above, the advantageous effect tends to be better achieved.

The nitrogen adsorption specific surface area of the carbon black is measured in accordance with JIS K 6217-2:2001.

The carbon black has a dibutyl phthalate oil absorption (DBP oil absorption) of preferably 40 mL/100 g or more, more preferably 60 mL/100 g or more, still more preferably 70 mL/100 g or more. The DBP is preferably 200 mL/100 g or less, more preferably 150 mL/100 g or less, still more preferably 100 mL/100 g or less. When the DBP oil absorption is within the range indicated above, the advantageous effect tends to be better achieved.

The DBP of the carbon black can be determined in accordance with JIS K 6217-4:2001.

The amount of carbon black per 100 parts by mass of the rubber component in the surface rubber layer composition is preferably 5 parts by mass or more, more preferably 8 parts by mass or more, still more preferably 10 parts by mass or more, while it is preferably 80 parts by mass or less, more preferably 60 parts by mass or less, still more preferably 40 parts by mass or less, particularly preferably 20 parts by mass or less. When the amount is within the range indicated above, the advantageous effect tends to be better achieved.

With regard to the inner rubber layer composition, the amount of carbon black per 100 parts by mass of the rubber

component in the lignin-based material-containing inner rubber layer composition is preferably 10 parts by mass or more, more preferably 15 parts by mass or more, still more preferably 20 parts by mass or more, while it is preferably 70 parts by mass or less, more preferably 50 parts by mass or less, still more preferably 40 parts by mass or less, particularly preferably 30 parts by mass or less. When the amount is within the range indicated above, the advantageous effect tends to be better achieved.

The amount of carbon black in an inner rubber layer containing no lignin-based material is also desirably within the range indicated above.

Non-limiting examples of silica usable in the surface rubber layer composition and the inner rubber layer composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as chaff (for example, silica made of a biomass material such as chaff as a raw material). The silica may be silica recycled from a silica-containing product. Preferred among these are hydrous silica prepared by a wet process because it has a large number of silanol groups. Each of the silica may be used alone or two or more of these may be used in combination.

The silica made of a biomass material as a raw material can be obtained by, for example, extracting a silicate using a sodium hydroxide solution from chaff ash obtained by burning chaff, subsequently, as in silica produced in a conventional wet process, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in chaff ash can be suppressed by controlling the burning temperature and burning hours (see JP 2009-2594 A, Akita Prefectural University Web Journal B/2019, vol.6, pp.216-222, etc.).

Amorphous silica extracted from chaff may be commercially available from Wilmar, etc.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

The amount Sc of silica per 100 parts by mass of the rubber component in the surface rubber layer composition is preferably 20 parts by mass or more, more preferably 30 parts by mass or more, still more preferably 50 parts by mass or more, particularly preferably 70 parts by mass or more, while it is preferably 150 parts by mass or less, more preferably 100 parts by mass or less, still more preferably 90 parts by mass or less. When the amount is within the range indicated above, the advantageous effect tends to be better achieved.

The amount of the plant-derived silica and the amount of the chaff silica are also desirably within the range indicated above.

The mechanism of how the surface rubber layer composition containing a predetermined amount or more, particularly 30 parts by mass or more of silica provides a better advantageous effect is not exactly clear. Presumably, since OH groups are also present on the surface of silica, the silica form a network with the lignin-based material to allow the tread surface to have better hydrophilicity, whereby the advantageous effect can more likely be achieved. Therefore, the wet performance is presumably improved significantly.

With regard to the inner rubber layer composition, the amount of silica per 100 parts by mass of the rubber component in the lignin-based material-containing inner rubber layer composition is preferably 5 parts by mass or more, more preferably 20 parts by mass or more, still more preferably 30 parts by mass or more, while it is preferably 100 parts by mass or less, more preferably 70 parts by mass or less, still more preferably 50 parts by mass or less. When the amount is within the range indicated above, the advantageous effect tends to be better achieved.

The amount of the plant-derived silica and the amount of the chaff silica are also desirably within the range indicated above.

The amount of silica in an inner rubber layer composition containing no lignin-based material is also desirably within the range indicated above.

Examples of hard-to-disperse fillers usable in the surface rubber layer composition and the inner rubber layer composition include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced

therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone or in combinations of two or more thereof.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers, if present, in the surface rubber layer composition or in the inner rubber layer composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The amount of fillers (total amount of fillers such as a lignin-based material, carbon black, and silica) per 100 parts by mass of the rubber component in the surface rubber layer composition is preferably 60 parts by mass or more, more preferably 85 parts by mass or more, still more preferably 95 parts by mass or more, particularly preferably 100 parts by mass or more, while it is preferably 150 parts by mass or less, more preferably 140 parts by mass or less, still more preferably 120 parts by mass or less, particularly preferably 115 parts by mass or less. When the amount is within the range indicated above, the advantageous effect tends to be better achieved.

With regard to the inner rubber layer composition, the amount of fillers (total amount of fillers such as a lignin-based material, carbon black, and silica) per 100 parts by mass of the rubber component in the lignin-based material-containing inner rubber layer composition is preferably 30 parts by mass or more, more preferably 40 parts by mass or more, still more preferably 50 parts by mass or more, particularly preferably 53 parts by mass or more, while it is preferably 120 parts by mass or less, more preferably 90 parts by mass or less, still more preferably 70 parts by mass or less. When the amount is within the range indicated above, the advantageous effect tends to be better achieved.

The amount of fillers in an inner rubber layer containing no lignin-based material is also desirably within the range indicated above.

The surface rubber layer composition and the inner rubber layer composition each preferably contain a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone or in combinations of two or more thereof.

The amount of silane coupling agents per 100 parts by mass of the silica in each of the surface rubber layer composition and the inner rubber layer composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The surface rubber layer composition and the inner rubber layer composition may each contain a plasticizer.

Herein, the term "plasticizer" refers to a material that imparts plasticity to rubber components and conceptually includes both liquid (in a liquid state) plasticizers which are liquid at room temperature (25°C) and solid plasticizers which are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone or in combinations of two or more.

Examples of plasticizers include oils, liquid polymers, and resins. Each of these may be used alone or in combinations of two or more thereof.

Examples of oils include process oils, plant oils, and animal oils. Examples of process oils include paraffinic process oils (mineral oils), naphthenic process oils, and aromatic process oils. Specific examples of process oils include mild extract solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone or in combinations of two or more thereof.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as $^1$H-NMR analysis. For example, a rubber composition containing triacylglycerol is immersed in deuterium chloroform at room temperature (25°C) for 24 hours. After removing the rubber composition, the $^1$H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable oils may be commercial products available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of which are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins which are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone or in combinations of two or more thereof. The resins themselves may be copolymers of different monomers. Aromatic vinyl polymers, petroleum resins, terpene

resins, and hydrogenated products of these polymers and resins are desirable among these.

The softening point of the resins which are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins which are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

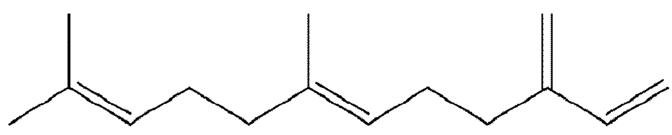

.

The farnesene polymers may be either homopolymers of farnesene (farnesene homopolymers) or copolymers of farnesene and vinyl monomers (farnesene-vinyl monomer copolymers). Each of these may be used alone or in combinations of two or more thereof. Copolymers of farnesene and vinyl monomers are preferred among these.

Examples of the vinyl monomers include aromatic vinyl compounds such as styrene, 2-methylstyrene, 3-methylstyrene, 4-methylstyrene, $\alpha$-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tertbutoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone or in combinations of two or more thereof. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 to 300000 may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers which are liquid at room temperature (25°C) are desirable.

The amount of plasticizers (total amount of plasticizers) per 100 parts by mass of the rubber component in the surface rubber layer composition is preferably 18 parts by mass or more, more preferably 25 parts by mass or more, still more preferably 30 parts by mass or more, particularly preferably 36 parts by mass or more. The upper limit is preferably 60 parts by mass or less, more preferably 50 parts by mass or less, still more preferably 45 parts by mass or less. When the amount is within the range indicated above, the advantageous effect tends to be better achieved.

The amount of plasticizers includes the amount of oils or resins contained in oil-extended rubbers or resin-extended rubbers.

The amount of solid plasticizers which are solid at room temperature (25°C) per 100 parts by mass of the rubber component in the surface rubber layer composition is preferably 8 parts by mass or more, more preferably 13 parts by mass or more, still more preferably 16 parts by mass or more. The upper limit is preferably 40 parts by mass or less, more preferably 30 parts by mass or less, still more preferably 25 parts by mass or less. When the amount is within the range indicated above, the advantageous effect tends to be better achieved.

The amount of the resins which are solid at room temperature (25°C) and the amount of the aromatic vinyl polymers are each also preferably within the range indicated above.

The amount of liquid plasticizers which are liquid at room temperature (25°C) per 100 parts by mass of the rubber component in the surface rubber layer composition is preferably 10 parts by mass or more, more preferably 15 parts by mass or more, still more preferably 20 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of oils which are liquid at room temperature (25°C) is also desirably within the same range.

With regard to the inner rubber layer composition, the amount of plasticizers (total amount of plasticizers) per 100 parts by mass of the rubber component in the lignin-based material-containing inner rubber layer composition is preferably 30 parts by mass or less, more preferably 10 parts by mass or less, still more preferably 5 parts by mass or less, and may be 0 parts by mass. When the amount is within the range indicated above, the advantageous effect tends to be better achieved.

The amount of plasticizers includes the amount of oils or resins contained in oil-extended rubbers or resin-extended rubbers.

The amount of plasticizers in an inner rubber layer containing no lignin-based material is also desirably within the range indicated above.

The amount of solid plasticizers which are solid at room temperature (25°C) per 100 parts by mass of the rubber component in the inner rubber layer composition is preferably 30 parts by mass or less, more preferably 10 parts by mass or less, still more preferably 5 parts by mass or less, and may be 0 parts by mass. When the amount is within the range indicated above, the advantageous effect tends to be better achieved.

The amount of the resins which are solid at room temperature (25°C) is desirably within the range indicated above.

The amount of solid plasticizers which are solid at room temperature (25°C) in an inner rubber layer containing no

lignin-based material is also desirably within the range indicated above.

The amount of liquid plasticizers which are liquid at room temperature (25°C) per 100 parts by mass of the rubber component in the inner rubber layer composition is preferably 30 parts by mass or less, more preferably 10 parts by mass or less, still more preferably 5 parts by mass or less, and may be 0 parts by mass. When the amount is within the range indicated above, the advantageous effect tends to be better achieved.

The amount of the liquid plasticizers includes the amounts of oils contained in oil-extended rubbers and the amount of liquid resins in resin-extended rubbers extended with liquid resins.

The amount of oils which are liquid at room temperature (25°C) is desirably within the range indicated above.

The amount of liquid plasticizers which are liquid at room temperature (25°C) in an inner rubber layer containing no lignin-based material is also desirably within the range indicated above.

In view of crack resistance, ozone resistance, etc., the surface rubber layer composition and the inner rubber layer composition each preferably contain an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in each of the surface rubber layer composition and the inner rubber layer composition is preferably 0.5 parts by mass or more, more preferably 1.5 parts by mass or more, still more preferably 2.0 parts by mass or more. The amount is preferably 7.0 parts by mass or less, more preferably 5.0 parts by mass or less.

The surface rubber layer composition and the inner rubber layer composition each preferably contain stearic acid.

The amount of stearic acid per 100 parts by mass of the rubber component in each of the surface rubber layer composition and the inner rubber layer composition is preferably 0.5 parts by mass or more, more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The surface rubber layer composition and the inner rubber layer composition each preferably contain zinc oxide.

The amount of zinc oxide per 100 parts by mass of the rubber component in each of the surface rubber layer composition and the inner rubber layer composition is preferably 0.5 parts by mass or more, more preferably 2.0 parts by mass or more, while it is preferably 5.0 parts by mass or less, more preferably 3.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The surface rubber layer composition and the inner rubber layer composition may each contain a wax.

The amount of waxes per 100 parts by mass of the rubber component in each of the surface rubber layer composition and the inner rubber layer composition is preferably 0.5 parts by mass or more, more preferably 2.0 parts by mass or more, while it is preferably 10.0 parts by mass or less, more preferably 5.0 parts by mass or less.

The wax is not limited. Any wax usually used in the tire industry may be suitably used. Examples include petroleum waxes, mineral waxes, synthetic waxes, and plant-derived waxes. Petroleum waxes and plant-derived waxes are preferred, with petroleum waxes being more preferred. Examples of plant-derived waxes include rice waxes, carbana waxes, and candelilla waxes. Examples of petroleum waxes include paraffin waxes and microcrystalline waxes as well as selected special waxes thereof. Paraffin waxes are preferred. According to the present embodiments, waxes do not include stearic acid. Usable commercial products of waxes are available from Ouchi Shinko Chemical Industrial Co., Ltd., Nippon Seiro Co., Ltd., Paramelt, etc. Each of these waxes may be used alone or in combinations of two or more thereof.

The surface rubber layer composition and the inner rubber layer composition each contain sulfur.

The amount of sulfur per 100 parts by mass of the rubber component in each of the surface rubber layer composition and the inner layer rubber composition is preferably 0.5 parts by mass or more, more preferably 1.0 parts by mass or more, still more preferably 1.5 parts by mass or more. The amount is preferably 3.5 parts by mass or less, more preferably 3.0 parts by mass or less, still more preferably 2.5 parts by mass or less. When the amount is within the range

indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone or in combinations of two or more thereof.

The surface rubber layer composition and the inner rubber layer composition each preferably contain a vulcanization accelerator.

The amount of vulcanization accelerators in each of the surface rubber layer composition and the inner rubber layer composition is not limited and may be freely determined according to the desired curing rate and crosslink density. Still, the amount per 100 parts by mass of the rubber component is preferably 1.0 parts by mass or more, more preferably 3.0 parts by mass or more, still more preferably 4.0 parts by mass or more. The upper limit is preferably 8.0 parts by mass or less, more preferably 7.0 parts by mass or less, still more preferably 6.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone or in combinations of two or more thereof. Sulfenamide vulcanization accelerators, guanidine vulcanization accelerators, and benzothiazole vulcanization accelerators are preferred among these.

In addition to the above-described components, the surface rubber layer composition and the inner rubber layer composition may each appropriately contain agents commonly used in the tire industry such as releasing agents or other materials.

Herein, various materials containing carbon atoms (for example, rubbers, oils, resins, vulcanization accelerators, antioxidants, surfactants, etc.) may be derived from carbon dioxide in the air. Components of the present invention may be obtained from carbon dioxide by directly converting carbon dioxide or by synthesizing methane from carbon dioxide through methanation and then converting the methane.

The surface rubber layer composition and the inner rubber layer composition can be produced by, for example, kneading the above-described components using a rubber mixing machine such as an open roll mill or a Banbury mixer and then vulcanizing the kneaded mixture.

The kneading conditions are as follows. In a base kneading step of kneading additives other than crosslinking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

The surface rubber layer composition (the rubber composition after vulcanization) has an acetone-extractable content AE (% by mass) of preferably 13.4% by mass or higher, more preferably 13.7% by mass or higher, still more preferably 14.3% by mass or higher, further more preferably 15.0% by mass or higher, further more preferably 18.2% by mass or higher, further more preferably 18.5% by mass or higher, particularly preferably 19.2% by mass or higher. The upper limit of the AE is preferably 30.0% by mass or lower, more preferably 25.0% by mass or lower, still more preferably 22.0% by mass or lower. When the AE is within the range indicated above, the advantageous effect tends to be suitably achieved.

The mechanism of how the surface rubber layer composition having a predetermined acetone extractable content or higher, particularly 15.0% by mass or higher acetone extractable content provides a better advantageous effect is not exactly clear. Presumably, the higher the acetone-extractable content is, the more the dispersion of the lignin-based material or the dispersion of the silica is promoted, whereby the advantageous effect can more likely be achieved. Therefore, the wet performance is presumably improved significantly.

Herein, the acetone-extractable content (AE) is measured by a method for measuring an acetone-extractable content in accordance with JIS K 6229:2015.

The AE can be controlled by methods known to a person skilled in the art. For example, the AE tends to be high when the amount of plasticizers such as oils in the rubber composition is increased.

The tire is produced using the surface rubber layer composition and the inner rubber layer composition by usual methods. Specifically, the rubber compositions containing necessary additives before vulcanization are extruded and

processed into the shapes of tire components such as the surface rubber layer and the inner rubber layer and then molded on a tire building machine by usual methods. The resulting tire components are assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, etc.

The thickness Tc (mm) of the surface rubber layer in the tire is preferably 15.0 mm or less, more preferably 12.5 mm or less, still more preferably 12.0 mm or less, further more preferably 11.0 mm or less, particularly preferably 10.0 mm or less. The lower limit of the thickness Tc of the surface rubber layer is preferably 4.0 mm or more, more preferably 6.0 mm or more, still more preferably 7.0 mm or more, further more preferably 7.5 mm or more. When the thickness Tc is within the range indicated above, the advantageous effect tends to be suitably achieved.

The total thickness (mm) of the inner rubber layer in the tire is preferably 0.5 mm or more, more preferably 0.7 mm or more, still more preferably 1.1 mm or more, further more preferably 1.3 mm or more, further more preferably 2.0 mm or more, particularly preferably 2.5 mm or more. The upper limit of the total thickness of the inner rubber layer is preferably 6.0 mm or less, more preferably 5.0 mm or less, still more preferably 4.0 mm or less. When the total thickness is within the range indicated above, the advantageous effect tends to be suitably achieved.

In the multilayer tread portion including the surface rubber layer and one or more inner rubber layers located inwardly of the surface rubber layer in a tire radial direction in the tire, a ratio of the total thickness (mm) of the inner rubber layer to the thickness of the entire multilayer tread portion (thickness (mm) of surface rubber layer + total thickness (mm) of inner rubber layer) (= the total thickness/the entire thickness $\times$ 100(%)) is preferably 10% or higher, more preferably 15% or higher, still more preferably 20% or higher. The upper limit of the ratio is preferably 50% or lower, more preferably 40% or lower, still more preferably 30% or lower. When the ratio is a predetermined value or more, the fuel economy tends to be improved.

The mechanism of providing the advantageous effect by the predetermined ratio or higher, particularly 15% or higher is not exactly clear. Presumably, the higher the proportion of the inner layer is, the more the heat generation in the tire is suppressed, whereby a fuel economy-improving effect is presumably obtained.

In the tire, the thickness Tb (mm) of the lignin-based material-containing inner rubber layer is preferably 0.3 mm or more, more preferably 0.7 mm or more, still more preferably 1.0 mm or more, particularly preferably 1.5 mm or more. The upper limit of the thickness Tb (mm) of the inner rubber layer is preferably 4.5 mm or less, more preferably 4.0 mm or less, still more preferably 3.0 mm or less. When the thickness Tb is within the range indicated above, the advantageous effect tends to be suitably achieved.

Herein, the term "thickness Tc of the surface rubber layer" refers to the thickness of the surface rubber layer on the tire equator in a cross-section along the tire radial direction. The thickness means a straight line distance from the tread surface (surface of the surface rubber layer) to the inner face of the surface rubber layer in the tire radial direction in a cross-section along the tire radial direction.

The term "total thickness of the inner rubber layer" refers to the total thickness of the one or more inner rubber layers on the tire equator in a cross-section along the tire radial direction. The thickness means a straight line distance from the inner face of the surface rubber layer in the tire radial direction to the inner face of the innermost rubber layer among the one or more inner rubber layers in the tire radial direction in a cross-section along the tire radial direction.

The term "thickness of the entire multilayer tread portion" refers to the thickness of the entire multilayer tread portion on the tire equator in a cross-section along the tire radial direction. The thickness means a straight line distance from the tread surface (surface of the surface rubber layer) to the inner face of the innermost rubber layer among the one or more inner rubber layers in the tire radial direction in a cross-section along the tire radial direction. Specifically, the thickness means a straight line distance from the tread surface to an interface with a reinforcing layer located on the outermost side of the tire in the tire radial direction among reinforcing layers each containing fiber materials, such as a belt layer and a carcass layer.

The term "thickness Tb of the lignin-based material-containing inner rubber layer" refers to the thickness of each lignin-based material-containing inner rubber layer on the tire equator in a cross-section along the tire radial direction. The thickness means a straight line distance from the outer face of each lignin-based material-containing inner rubber layer in the tire radial direction to the inner face of the lignin-based material-containing inner face in the tire radial direction in a cross-section along the tire radial direction.

The "thickness Tc of the surface rubber layer", "total thickness of the inner rubber layer", "thickness of the entire multilayer tread portion", and "thickness Tb of the lignin-based material-containing inner rubber layer" are measured on the tire equator along the tire equator.

In the case where a conducting member or the like is present on the tire equator, each thickness is measured

along the tire equator from a straight line connecting the edges of the interface interrupted by the conducting member.

In the case where a groove is present on the tire equator, each thickness is measured at a central portion of a land portion nearest to the tire equator in the tire width direction. The thickness is measured along the normal of the outer surface in the tire radial direction of the surface rubber layer, the inner rubber layer, or the multilayer tread portion.

In the tire, a ratio (Lc/Tc) of the amount Lc (parts by mass) of the lignin-based material per 100 parts by mass of the rubber component in the surface rubber layer composition to the thickness Tc (mm) of the surface rubber layer is preferably 0.5 or higher, more preferably 1.0 or higher, still more preferably 1.5 or higher, further more preferably 1.6 or higher, particularly preferably 2.0 or higher. The upper limit of the ratio Lc/Tc is preferably 5.0 or lower, more preferably 4.0 or lower, still more preferably 3.0 or lower. When the ratio is within the range indicated above, the advantageous effect tends to be suitably achieved.

The mechanism of better providing the advantageous effect by the predetermined ratio Lc/Tc or higher, particularly 1.0 or higher is not exactly clear. Presumably, mixing a predetermined amount or more of the lignin-based material relative to the thickness of the surface rubber layer allows the tread surface to have better hydrophilicity, whereby the advantageous effect can more likely be achieved. Therefore, the wet performance is presumably improved significantly.

In the tire, a ratio (Sc/Tc) of the amount Sc (parts by mass) of the silica per 100 parts by mass of the rubber component in the surface rubber layer composition to the thickness Tc (mm) of the surface rubber layer is preferably 2.0 or higher, more preferably 5.0 or higher, still more preferably 5.6 or higher, further more preferably 5.8 or higher, further more preferably 6.0 or higher, particularly preferably 7.0 or higher. The upper limit of the ratio Sc/Tc is preferably 10.0 or lower, more preferably 9.0 or lower, still more preferably 8.5 or lower. When the ratio is within the range indicated above, the advantageous effect tends to be suitably achieved.

The mechanism of better providing the advantageous effect by the predetermined ratio Sc/Tc or higher, particularly 5.0 or higher is not exactly clear. Presumably, mixing a predetermined amount or more of silica relative to the thickness of the surface rubber layer causes network formation by the silica and the lignin-based material to allow the tread surface to have better hydrophilicity, whereby the advantageous effect can more likely be achieved. Therefore, the wet performance is presumably improved significantly.

In the tire, the groove depth D (mm) of a circumferential groove on the multilayer tread portion is preferably 5.0 mm or more, more preferably 6.0 mm or more, still more preferably 7.0 mm or more, while it is preferably 11.0 mm or less, more preferably 10.0 mm or less, still more preferably 9.0 mm or less, further more preferably 8.0 mm or less. When the groove depth D is within the range indicated above, the advantageous effect tends to be better achieved.

The mechanism of better providing the advantageous effect by controlling the groove depth D of a circumferential groove on the tread portion to be within a predetermined range is not exactly clear. Presumably, the controlled groove depth reliably provides good grip. As a result, the wet performance is presumably improved significantly.

Herein, the term "groove depth D of a circumferential groove" is measured along the normal of a face that is extended from the ground contact face of the outermost surface of the tread and refers to a distance from the face extended from the ground contact face to the bottom of the deepest groove, specifically, the largest distance among the groove depths of existing circumferential grooves.

In the tire, a ratio (Lc/D) of the amount Lc (parts by mass) of the lignin-based material per 100 parts by mass of the rubber component in the surface rubber layer composition to the groove depth D (mm) of a circumferential groove on the multilayer tread portion is preferably 0.5 to 6.0.

The ratio Lc/D is preferably 0.7 or higher, more preferably 1.0 or higher, still more preferably 1.8 or higher, further more preferably 2.0 or higher, further more preferably 2.5 or higher, particularly preferably 2.85 or higher. The upper limit of the ratio Lc/D is preferably 5.0 or lower, more preferably 4.0 or lower, still more preferably 3.5 or lower. When the ratio is within the range indicated above, the advantageous effect tends to be better achieved.

The mechanism of better providing the advantageous effect by controlling the ratio Lc/D to be 0.5 to 6.0 is not exactly clear. Presumably, the controlled groove depth reliably provides good grip, and the sufficient lignin-based material content allows the tread surface to have better hydrophilicity, whereby the advantageous effect can more likely be achieved. Therefore, the wet performance is presumably improved significantly.

In the tire, a ratio (Sc/D) of the amount Sc (parts by mass) of the silica per 100 parts by mass of the rubber component in the surface rubber layer composition to the groove depth D (mm) of a circumferential groove on the multilayer tread is desirably 0.5 to 20.0.

The ratio Sc/D is preferably 2.8 or higher, more preferably 6.3 or higher, still more preferably 8.0 or higher, further more preferably 9.0 or higher, further more preferably 10.0 or higher. The upper limit of the ratio Sc/D is preferably 15.0 or lower, more preferably 14.0 or lower, still more preferably 13.0 or lower, further more preferably 12.0 or lower. When the ratio is within the range indicated above, the advantageous effect tends to be better achieved.

The mechanism of better providing the advantageous effect by controlling the ratio Sc/D to be 0.5 to 20.0 is not exactly clear. Presumably, the controlled groove depth reliably provides good grip, and the mixing of a predetermined amount or more of silica causes network formation by the silica and the lignin-based material to allow the tread surface to

have better hydrophilicity, whereby the advantageous effect can more likely be achieved. Therefore, the wet performance is presumably improved significantly.

Herein, the dimensions such as thickness are measured while the width between the bead portions of the tire is fixed to the normal rim width. In the measurement of each dimension, a sample is cut from the tire in the tire radial direction, and the width between the bead edges on both sides of the sample is fixed to the normal rim width.

Herein, the dimensions of the parts of the tire are measured for the tire in the normal state, unless otherwise stated.

Herein, the term "normal state" refers to a state where the tire is mounted on a normal rim (not shown), inflated to a normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Herein, the term "normal load" refers to a load specified for each tire by the standard in a standard system including standards according to which the tire is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height T (mm) of tire
Wt: cross-sectional width (mm) of tire

The term "cross-sectional width Wt (mm)" of the tire refers to the width of the tire in the normal state corresponding to the largest distance between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to a half of the difference between the outer diameter Dt of the tire and the rim diameter R. In other words, the cross-sectional height Ht can be determined by (Dt - R)/2.

An exemplary embodiment of the tire of the present invention is described with reference to drawing. The present invention is not limited to the embodiment.

In FIG. 1, the vertical direction corresponds to the radial direction of a tire 2, the horizontal direction corresponds to the axial direction of the tire 2, and the direction perpendicular to the paper corresponds to the circumferential direction of the tire 2. The tire 2 is bilaterally symmetrical. A tread portion 4 (multilayer tread portion) includes a cap layer 30 (surface rubber layer) and a base layer 28 (inner rubber layer). The cap layer 30 includes the surface rubber layer composition. The base layer 28 includes the lignin-based material-containing inner rubber layer composition.

Although FIG. 1 shows an example of a two-layer tread including the cap layer 30 and the base layer 28, the tread may be a monolayer tread or a three or more layer tread.

In the tire 2 in FIG. 1, both the cap layer 30 and the base layer 28 contain the lignin-based material. The amount Lc (parts by mass) of the lignin-based material per 100 parts by mass of the rubber component in the cap layer 30 is equal to or larger than the amount Lb (parts by mass) of the lignin-based material per 100 parts by mass of the rubber component in the base layer 28 ($Lc \geq Lb$).

In the tire 2, each sidewall 6 extends radially substantially inwardly from an edge of the tread portion 4. The radially outer portion of the sidewall 6 is bonded to the tread portion 4. The radially inner portion of the sidewall 6 is bonded to a clinch 10. The sidewall 6 can prevent damage to a carcass 14.

In FIG. 1, each wing 8 is located between the tread portion 4 and the sidewall 6. The wing 8 is bonded to both the tread portion 4 and the sidewall 6.

Each clinch 10 is located radially substantially inwardly of the sidewall 6 and has at least one part to contact a rim.

The carcass 14 includes a carcass ply 36. Although the carcass 14 in the tire 2 includes one carcass ply 36, it may include two or more carcass plies.

In the tire 2, the carcass ply 36 extends between the bead cores 32 on opposite sides along the tread portion 4 and the sidewalls 6. The carcass ply 36 is folded around each bead core 32 from the inside to the outside in the axial direction. Due to the folding, the carcass ply 36 is provided with a main portion 36a and a pair of folded portions 36b. Namely, the carcass ply 36 includes the main portion 36a and a pair of the folded portions 36b.

Each bead core 32 includes a bead apex 34 radially outwardly extending from the bead core 32. The bead core 32 has a ring shape and desirably contains a wound nonstretchable wire. The bead apex 34 is radially outwardly tapered.

Though not shown, the carcass ply 36 desirably consists of a large number of parallel cords and a topping rubber. The absolute value of the angle of each cord with respect to the equator CL is suitably from 75° to 90°. In other words, the carcass 14 preferably has a radial structure.

In FIG. 1, a belt layer 16 is located radially inwardly of the tread portion 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times but preferably not more than 0.9 times the cross-sectional width of the tire 2.

The interior layer 38 and the exterior layer 40 each desirably include a parallel array of single-strand steel cords (steel monofilaments) and a topping rubber (coating rubber). In other words, the belt layer 16 contains a parallel array of steel monofilaments.

In FIG. 1, the band 18 is located radially outwardly of the belt layer 16. The band 18 has an axial width that is equal to that of the belt layer 16. The band 18 may have a larger width than the belt layer 16.

Though not shown, the band 18 desirably consists of a cord and a topping rubber. The cord is spirally wound. This band 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The belt layer 16 and the band 18 in FIG. 1 constitute a reinforcing layer. The reinforcing layer may consist only of the belt layer 16.

FIG. 2 is an enlarged view showing the tread portion 4 (multilayer tread portion) and its vicinity in FIG. 1.

The tire in FIG. 2 is the tire 2 having a groove 26 on the tire equator (on CL).

In this case, the thickness Tc of the cap layer 30, the thickness of the base layer 28 (corresponding to the thickness Tb of the lignin-based material-containing inner rubber layer or the total thickness of the inner rubber layer), and the thickness of the entire tread portion 4 (the thickness of the entire multilayer tread portion) are each measured at a central portion of a land portion nearest to a groove 26 on the tire equator in the tire width direction. The thickness is measured along the normal of the cap layer 30, the base layer 28, or the tread portion 4.

Specifically, the thickness Tc of the cap layer 30 refers to a straight line distance from the outer surface of the cap layer 30 in the tire radial direction to an interface of the base layer 28, the interface being on the outermost surface side of the tire in the tire radial direction.

The thickness Tb of the base layer 28 refers to a straight line distance from the outer surface of the base layer 28 in the tire radial direction to an interface of the band 18, the interface being on the outermost surface side of the tire in the tire

radial direction.

The thickness of the entire tread portion 4 refers to a straight line distance from the outer surface of the cap layer 30 in the tire radial direction to an interface of the band 18, the interface being on the outermost surface side of the tire in the tire radial direction. The thickness is a sum of the thickness Tc of the cap layer 30 and the thickness Tb of the base layer 28.

An innerliner 20 is located inwardly of the carcass 14. The innerliner 20 is bonded to the inner surface of the carcass 14. A typical substrate rubber of the innerliner 20 is butyl rubber or a halogenated butyl rubber. The innerliner 20 maintains the inner pressure of the tire 20.

Each chafer 22 is located near the bead 12. In this embodiment, the chafer 22 desirably consists of a rubber and a fabric impregnated with the rubber. The chafer 22 may be integrated with the clinch 10.

In the tire 2, the tread portion 4 has main grooves 42 as grooves 26. As shown in FIG. 1, the tread portion 4 has a plurality of, specifically three, main grooves 42 engraved thereon. The main grooves 42 are spaced apart in the axis direction. Four ribs 44 extending in the circumferential direction are defined by the three main grooves 42 engraved on the tread portion 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

In FIG. 2, D represents the groove depth of the main circumferential groove 42 on the tread portion 4.

In the tire 2, the amount Lc of the lignin-based material per 100 parts by mass of the rubber component in the cap layer 30, the amount Lb of the lignin-based material per 100 parts by mass of the rubber component in the base layer 28, the thickness Tc of the cap layer 30, the amount Sc of silica per 100 parts by mass of the rubber component in the cap layer 30, and the groove depth D of a circumferential groove on the tread portion 4 desirably satisfy the above-described ranges of Lc/Tc, Sc, Tc, Sc/Tc, D, Lc/D, and Sc/D.

## EXAMPLES

Examples (working examples) which are considered preferable to implement the present invention are described below although the scope of the disclosure is not limited to the examples.

Chemicals used in the production of a cap layer (surface rubber layer) and a base layer (inner rubber layer) are listed below. If necessary, the chemicals are purified by usual techniques.

(Cap layer)

NR: TSR20
SBR: SBR1502 (styrene content: 23.5% by mass) available from JSR Corporation
BR: BR150B (cis content: 96%) available from Ube Industries, Ltd.
Lignin-based material: lignin sulfonate ($N_2SA$: 123 $\mu m^2/g$)
Carbon black: SHOBLACK N220 ($N_2SA$: 111 $m^2/g$) available from Cabot Japan K.K.
Silica: ULTRASIL VN3 ($N_2SA$: 175 $m^2/g$) available from Evonik Degussa
Silane coupling agent: Si266 (bis(3-triethoxysilylpropyl)disulfide) available from Evonik Degussa
Resin: SYLVARES SA85 (a-methylene styrene resin (a copolymer of $\alpha$-methylene and styrene), softening point: 85°C) available from Arizona Chemical
Oil: vivatec500 (TDAE, aromatic process oil) available from H&R
Zinc oxide: zinc oxide #1 available from Mitsui Mining & Smelting Co., Ltd.
Antioxidant: Antigen 6C (N-(1,3-dimethylbutyl)-N'-phenyl-p-phenylenediamine) available from Sumitomo Chemical Co., Ltd.
Stearic acid: stearic acid "TSUBAKI" available from NOF Corporation
Wax: Ozoace 0355 available from Nippon Seiro Co., Ltd.
Sulfur: HK-200-5 (powdered sulfur) available from Hosoi Chemical Industry Co., Ltd.
Vulcanization accelerator 1: NOCCELER D (N,N'-diphenylguanidine) available from Ouchi Shinko Chemical Industrial Co., Ltd.
Vulcanization accelerator 2: NOCCELER CZ-G (N-cyclohexyl-2-benzothiazolylsulfenamide) available from Ouchi Shinko Chemical Industrial Co., Ltd.

(Base layer)

NR: TSR20
BR: BR150B (cis content: 97%) available from Ube Industries, Ltd.
Lignin-based material: lignin sulfonate ($N_2SA$: 123 $\mu m^2/g$)
Carbon black: SHOBLACK N220 ($N_2SA$: 111 $m^2/g$) available from Cabot Japan K.K.
Silica: ULTRASIL VN3 ($N_2SA$: 175 $m^2/g$) available from Evonik Degussa
Silane coupling agent: Si266 (bis(3-triethoxysilylpropyl)disulfide) available from Evonik Degussa
Zinc oxide: zinc oxide #1 available from Mitsui Mining & Smelting Co., Ltd.
Antioxidant: Antigen 6C (N-(1,3-dimethylbutyl)-N'-phenyl-p-phenylenediamine) available from Sumitomo Chemical Co., Ltd.
Stearic acid: stearic acid "TSUBAKI" available from NOF Corporation
Wax: Ozoace 0355 available from Nippon Seiro Co., Ltd.
Sulfur: powdered sulfur available from Karuizawa sulfur Co., Ltd.
Vulcanization accelerator 1: NOCCELER D (N,N'-diphenylguanidine) available from Ouchi Shinko Chemical Industrial Co., Ltd.
Vulcanization accelerator 2: NOCCELER CZ-G (N-cyclohexyl-2-benzothiazolylsulfenamide) available from Ouchi Shinko Chemical Industrial Co., Ltd.

<Production of cap layer rubber composition>

According to the formulation in Table 1, the materials other than the sulfur and the vulcanization accelerators are kneaded in a 1.7-L Banbury mixer (Kobe Steel, Ltd.) at 150°C for five minutes to obtain a kneaded mixture.

The sulfur and the vulcanization accelerators are added to the kneaded mixture, and they are kneaded using an open roll mill at 80°C for five minutes to obtain an unvulcanized rubber composition.

<Production of base layer rubber composition>

According to the formulation in Table 1, the materials other than the sulfur and the vulcanization accelerators are kneaded in a 1.7-L Banbury mixer (Kobe Steel, Ltd.) at 150°C for five minutes to obtain a kneaded mixture.

The sulfur and the vulcanization accelerators are added to the kneaded mixture, and they are kneaded using an open roll mill at 80°C for five minutes to obtain an unvulcanized rubber composition.

<Production of test tire>

According to the specification shown in Table 1, the unvulcanized cap layer rubber composition and the unvulcanized base layer rubber composition are formed into the shapes of a cap layer and a base layer, respectively. The resulting layers are assembled with other tire components on a tire building machine to build an unvulcanized tire. The unvulcanized tire is vulcanized at 170°C for 10 minutes, whereby a test tire (size 205/70R15, a passenger car tire, FIGS. 1 and 2) is produced.

Test tires prepared according to the amounts and the specifications varied as shown in Table 1 are simulated. Table shows the results calculated as described in the evaluation methods below.

The reference comparative example is as follows.

Table 1: Comparative Example 5

<Acetone-extractable content (AE)>

A test rubber piece is collected from an inner part of a cap layer in the test tire. The amount of materials extracted with acetone in the test rubber piece is measured by a method for measuring an acetone-extractable content in accordance with JIS K 6229.

Acetone-extractable content AE (% by mass) = (Mass of sample before extraction - Mass of sample after extraction)/ Mass of sample before extraction $\times$ 100

<Wet performance>

The test tire is mounted on every wheel of a car (front-engine, front-wheel-drive car of 2000 cc displacement made in Japan). The braking distance of the car with an initial speed of 100 km/h on a wet asphalt road surface is determined and expressed as an index relative to the braking distance of the reference comparative example taken as 100. A higher index indicates better wet performance.

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Cap layer | | | | | | | | | | | | | | | | |
| Amount (parts by mass) | NR | 30 | 30 | 30 | 30 | 30 | 30 | 30 | 30 | 30 | 30 | 30 | 30 | 30 | 30 | 30 |
| | SBR | 40 | 40 | 40 | 40 | 40 | 40 | 40 | 40 | 40 | 40 | 40 | 40 | 40 | 40 | 40 |
| | BR | 30 | 30 | 30 | 30 | 30 | 30 | 30 | 30 | 30 | 30 | 30 | 30 | 30 | 30 | 30 |
| | Lignin-based material | 5 | 20 | 20 | 20 | 20 | 20 | 20 | 35 | 20 | | 3 | 3 | 3 | 3 | 3 |
| | Carbon black | 60 | 60 | 10 | 10 | 10 | 10 | 10 | 10 | 80 | 60 | 60 | 60 | 10 | 10 | 10 |
| | Silica | 20 | 20 | 70 | 70 | 70 | 70 | 70 | 70 | | 20 | 20 | 20 | 70 | 70 | 70 |
| | Silane coupling agent | 2 | 2 | 7 | 7 | 7 | 7 | 7 | 7 | | 2 | 2 | 2 | 7 | 7 | 7 |
| | Resin | 8 | 8 | 8 | 16 | 16 | 16 | 16 | 16 | 16 | 8 | 8 | 8 | 8 | 16 | 16 |
| | Oil | 10 | 10 | 10 | 20 | 20 | 20 | 20 | 20 | 20 | 10 | 10 | 10 | 10 | 20 | 20 |
| | Zinc oxide | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 | 2 | 2 | 2 | 2 | 2 | 2 |
| Base layer | | | | | | | | | | | | | | | | |
| Amount (parts by mass) | NR | 70 | 70 | 70 | 70 | 70 | 70 | 70 | 70 | 70 | 70 | 70 | 70 | 70 | 70 | 70 |
| | BR | 30 | 30 | 30 | 30 | 30 | 30 | 30 | 30 | 30 | 30 | 30 | 30 | 30 | 30 | 30 |
| | Lignin-based material | 3 | 3 | 3 | 3 | 3 | 3 | 3 | 3 | 3 | | 4 | 20 | 20 | 20 | 20 |
| | Carbon black | 50 | 50 | 20 | 20 | 20 | 20 | 20 | 20 | 20 | 50 | 50 | 50 | 20 | 20 | 20 |
| | Silica | | | 30 | 30 | 30 | 30 | 30 | 30 | 30 | | | | 30 | 30 | 30 |
| | Silane coupling agent | | | 3 | 3 | 3 | 3 | 3 | 3 | 3 | | | | 3 | 3 | 3 |
| | Zinc oxide | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 | 2 | 2 | 2 | 2 | 2 | 2 |
| Lc/Lb | | 1.7 | 6.7 | 6.7 | 6.7 | 6.7 | 6.7 | 6.7 | 11.7 | 6.7 | | 0.8 | 0.2 | 0.2 | 0.2 | 0.2 |
| Acetone-extractable content AE (cap layer) | | 14.3 | 13.4 | 13.1 | 19.2 | 19.2 | 19.2 | 19.2 | 18.2 | 19.0 | 14.7 | 14.5 | 14.5 | 14.1 | 20.9 | 20.9 |
| Thickness Tc (mm) of cap layer | | 10.0 | 10.0 | 10.0 | 10.0 | 10.0 | 12.5 | 12.0 | 7.0 | 10.0 | 10.0 | 10.0 | 10.0 | 10.0 | 10.0 | 10.0 |
| Thickness Tb (mm) of base layer | | 1.1 | 1.1 | 1.1 | 1.1 | 2.5 | 1.4 | 1.3 | 0.8 | 1.1 | 1.1 | 1.1 | 1.1 | 1.1 | 1.1 | 2.5 |
| Ratio (%) of total thickness of base layer | | 10 | 10 | 10 | 10 | 20 | 10 | 10 | 10 | 10 | 10 | 10 | 10 | 10 | 10 | 20 |
| Lc/Tc | | 0.5 | 2.0 | 2.0 | 2.0 | 2.0 | 1.6 | 1.7 | 5.0 | 2.0 | 0.0 | 0.3 | 0.3 | 0.3 | 0.3 | 0.3 |
| Sc/Tc | | 2.0 | 2.0 | 7.0 | 7.0 | 7.0 | 5.6 | 5.8 | 10.0 | 0.0 | 2.0 | 2.0 | 2.0 | 7.0 | 7.0 | 7.0 |
| Groove depth D (mm) of circumferential groove on multilayer tread portion | | 7.0 | 7.0 | 7.0 | 7.0 | 7.0 | 7.0 | 11.0 | 5.0 | 7.0 | 7.0 | 7.0 | 7.0 | 7.0 | 7.0 | 7.0 |
| Lc/D | | 0.7 | 2.9 | 2.9 | 2.9 | 2.9 | 2.9 | 1.8 | 7.0 | 2.9 | 0.0 | 0.4 | 0.4 | 0.4 | 0.4 | 0.4 |
| Sc/D | | 2.9 | 2.9 | 10.0 | 10.0 | 10.0 | 10.0 | 6.4 | 14.0 | 0.0 | 2.9 | 2.9 | 2.9 | 10.0 | 10.0 | 10.0 |
| Evaluation | Wet performance | 105 | 108 | 112 | 115 | 118 | 113 | 108 | 111 | 105 | 98 | 99 | 96 | 98 | 100 | 100 |

REFERENCE SIGNS LIST

| | |
|---|---|
| 2 | tire |
| 4 | tread portion (multilayer tread portion) |
| 6 | sidewall |
| 8 | wing |
| 10 | clinch |
| 12 | bead |
| 14 | carcass |
| 16 | belt layer |
| 18 | band |
| 20 | innerliner |
| 22 | chafer |
| 24 | tread surface |
| 26 | groove |
| 28 | base layer |
| 30 | cap layer |
| 32 | bead core |
| 34 | bead apex |
| 36 | carcass ply |
| 36a | main portion |
| 36b | folded portion |
| 38 | interior layer |
| 40 | exterior layer |
| 42 | main groove |
| 44 | rib |
| CL | tire equator |
| Tc | thickness of cap layer |
| Tb | thickness of base layer |
| D | groove depth of circumferential groove on multilayer tread portion |

## Claims

**1.** A tire, comprising a multilayer tread portion including a surface rubber layer and one or more inner rubber layers located inwardly of the surface rubber layer in a tire radial direction,

the surface rubber layer and at least one of the one or more inner rubber layers each containing a lignin-based material,
an amount Lc (parts by mass) of the lignin-based material per 100 parts by mass of a rubber component in the surface rubber layer being equal to or larger than an amount Lb (parts by mass) of the lignin-based material per 100 parts by mass of a rubber component in the lignin-based material-containing inner rubber layer.

**2.** The tire according to claim 1,
wherein the lignin-based material is at least one selected from the group consisting of lignin and lignin derivatives.

**3.** The tire according to claim 1 or 2,

wherein the surface rubber layer contains an isoprene-based rubber, and
the amount Lc of the lignin-based material per 100 parts by mass of the rubber component is 3 parts by mass or more.

**4.** The tire according to any one of claims 1 to 3,
wherein a ratio (Lc/Tc) of the amount Lc (parts by mass) of the lignin-based material per 100 parts by mass of the rubber component in the surface rubber layer to a thickness Tc (mm) of the surface rubber layer is 1.0 or higher.

**5.** The tire according to any one of claims 1 to 4,
wherein the surface rubber layer contains silica in an amount Sc of 30 parts by mass or more per 100 parts by mass of the rubber component.

**6.** The tire according to any one of claims 1 to 5,

wherein the lignin-based material-containing inner rubber layer comprises silica.

**7.** The tire according to any one of claims 1 to 6, wherein a ratio Lc/Lb is 5.0 to 9.0.

**8.** The tire according to any one of claims 1 to 7, wherein the surface rubber layer contains a plasticizer in an amount of 18 to 45 parts by mass per 100 parts by mass of the rubber component.

**9.** The tire according to any one of claims 1 to 8, wherein an amount of plasticizers in the lignin-based material-containing inner rubber layer is 5 parts by mass or less per 100 parts by mass of the rubber component.

**10.** The tire according to any one of claims 1 to 9, wherein the surface rubber layer has an acetone-extractable content AE of 15.0% by mass or higher, as determined according to JIS K 6229 and the description.

**11.** The tire according to any one of claims 1 to 10, wherein a percentage of a total thickness of the one or more inner rubber layers is 15% or more in a thickness of the entire multilayer tread portion taken as 100%.

**12.** The tire according to any one of claims 1 to 11, wherein the thickness Tc of the surface rubber layer is 12.0 mm or less.

**13.** The tire according to any one of claims 1 to 12, wherein a ratio (Sc/Tc) of the amount Sc (parts by mass) of the silica per 100 parts by mass of the rubber component in the surface rubber layer to the thickness Tc (mm) of the surface rubber layer is 5.0 or higher.

**14.** The tire according to any one of claims 1 to 13, wherein the multilayer tread portion has a circumferential groove with a groove depth D of 5.0 to 10.0 mm.

**15.** The tire according to any one of claims 1 to 14, wherein a ratio (Lc/D) of the amount Lc (parts by mass) of the lignin-based material per 100 parts by mass of the rubber component in the lignin-based material-containing surface rubber layer to the groove depth D (mm) of a circumferential groove on the multilayer tread portion is 0.5 to 6.0.

**16.** The tire according to any one of claims 1 to 15, wherein a ratio (Sc/D) of the amount Sc (parts by mass) of the silica per 100 parts by mass of the rubber component in the lignin-based material-containing surface rubber layer to the groove depth D (mm) of a circumferential groove on the multilayer tread portion is 0.5 to 13.0.

**Patentansprüche**

**1.** Reifen, umfassend einen mehrschichtigen Laufflächenabschnitt, der eine Oberflächen-Gummischicht und eine oder mehrere innere Gummischichten beinhaltet, die in einer Radialrichtung des Reifens innerhalb der Oberflächen-Gummischicht lokalisiert sind,

wobei die Oberflächen-Gummischicht und mindestens eine der einen oder mehreren inneren Gummischichten jeweils ein Material auf Lignin-Basis enthalten,
wobei eine Menge Lc (Masseteile) des Materials auf Lignin-Basis pro 100 Masseteile einer Gummi-/Kautschukkomponente in der Oberflächen-Gummischicht gleich oder größer ist als eine Menge Lb (Masseteile) des Materials auf Lignin-Basis pro 100 Masseteile einer Gummikomponente in der das Material auf Lignin-Basis enthaltenden inneren Gummischicht.

**2.** Reifen nach Anspruch 1, wobei das Material auf Lignin-Basis mindestens eines aus der Gruppe bestehend aus Lignin und Lignin-Derivaten ist.

3. Reifen nach Anspruch 1 oder 2,

wobei die Oberflächen-Gummischicht einen Kautschuk auf Isopren-Basis enthält und
die Menge Lc des Materials auf Lignin-Basis pro 100 Masseteile der Gummikomponente 3 Masseteile oder mehr beträgt.

4. Reifen nach einem der Ansprüche 1 bis 3,
wobei ein Verhältnis (Lc/Tc) der Menge Lc (Masseteile) des Materials auf Lignin-Basis pro 100 Masseteile der Gummikomponente in der Oberflächen-Gummischicht zu einer Dicke Tc (mm) der Oberflächen-Gummischicht 1,0 oder mehr ist.

5. Reifen nach einem der Ansprüche 1 bis 4,
wobei die Oberflächen-Gummischicht Silica in einer Menge Sc von 30 Masseteilen oder mehr pro 100 Masseteile der Gummikomponente enthält.

6. Reifen nach einem der Ansprüche 1 bis 5,
wobei die das Material auf Lignin-Basis enthaltende innere Gummischicht Silica umfasst.

7. Reifen nach einem der Ansprüche 1 bis 6,
wobei ein Verhältnis Lc/Lb 5,0 bis 9,0 ist.

8. Reifen nach einem der Ansprüche 1 bis 7,
wobei die Oberflächen-Gummischicht einen Weichmacher in einer Menge von 18 bis 45 Masseteilen pro 100 Masseteile der Gummikomponente enthält.

9. Reifen nach einem der Ansprüche 1 bis 8,
wobei eine Menge an Weichmachern in der das Material auf Lignin-Basis enthaltenden inneren Gummischicht 5 Masseteile oder weniger pro 100 Masseteile der Gummikomponente ist.

10. Reifen nach einem der Ansprüche 1 bis 9,
wobei die Oberflächen-Gummischicht einen Aceton-extrahierbaren Gehalt AE von 15,0 Massenprozent oder mehr aufweist, bestimmt gemäß JIS K 6229 und der Beschreibung.

11. Reifen nach einem der Ansprüche 1 bis 10,
wobei ein Prozentsatz einer Gesamtdicke der einen oder mehreren inneren Gummischichten 15 % oder mehr der Dicke des gesamten mehrschichtigen Laufflächenbereichs bezogen auf 100 % ist.

12. Reifen nach einem der Ansprüche 1 bis 11,
wobei die Dicke Tc der Oberflächen-Gummischicht 12,0 mm oder weniger ist.

13. Reifen nach einem der Ansprüche 1 bis 12,
wobei ein Verhältnis (Sc/Tc) der Menge Sc (Masseteile) an Silica pro 100 Masseteile der Gummikomponente in der Oberflächen-Gummischicht zur Dicke Tc (mm) der Oberflächen-Gummischicht 5,0 oder mehr ist.

14. Reifen nach einem der Ansprüche 1 bis 13,
wobei der mehrschichtige Laufflächenabschnitt eine Umfangsnut mit einer Nuttiefe D von 5,0 bis 10,0 mm hat.

15. Reifen nach einem der Ansprüche 1 bis 14,
wobei ein Verhältnis (Lc/D) der Menge Lc (Masseteile) des Materials auf Lignin-Basis pro 100 Masseteile der Gummikomponente in der das Material auf Lignin-Basis enthaltenden Oberflächen-Gummischicht zur Rillentiefe D (mm) einer Umfangsrille auf dem mehrschichtigen Laufflächenabschnitt 0,5 bis 6,0 ist.

16. Reifen nach einem der Ansprüche 1 bis 15,
wobei das Verhältnis (Sc/D) der Menge Sc (Masseteile) an Silica pro 100 Masseteile der Gummikomponente in der das Material auf Lignin-Basis enthaltenden Oberflächen-Gummischicht zur Rillentiefe D (mm) einer Umfangsrille auf dem mehrschichtigen Laufflächenabschnitt 0,5 bis 13,0 ist.

## Revendications

1. Pneumatique comprenant une partie de bande de roulement multicouche comportant une couche de caoutchouc superficielle et une ou plusieurs couches de caoutchouc internes situées à l'intérieur de la couche de caoutchouc superficielle dans un sens radial du pneu,

   la couche de caoutchouc superficielle et au moins une des une ou plusieurs couches de caoutchouc internes contenant chacune un matériau à base de lignine,
   une quantité Lc (parties en masse) du matériau à base de lignine pour 100 parties en masse d'un composant en caoutchouc dans la couche de caoutchouc superficielle étant égale ou supérieure à une quantité Lb (parties en masse) du matériau à base de lignine pour 100 parties en masse d'un composant en caoutchouc dans la couche de caoutchouc intérieure contenant le matériau à base de lignine.

2. Pneumatique selon la revendication 1,
   dans lequel le matériau à base de lignine est au moins un matériau choisi dans le groupe constitué par la lignine et les dérivés de lignine.

3. Pneumatique selon la revendication 1 ou 2,

   dans lequel la couche de caoutchouc superficielle contient un caoutchouc à base d'isoprène, et
   la quantité Lc du matériau à base de lignine pour 100 parties en masse du composant en caoutchouc est de 3 parties en masse ou plus.

4. Pneumatique selon l'une quelconque des revendications 1 à 3,
   dans lequel un rapport (Lc/Tc) entre la quantité Lc (parties en masse) du matériau à base de lignine pour 100 parties en masse du composant en caoutchouc dans la couche de caoutchouc superficielle et l'épaisseur Tc (mm) de la couche de caoutchouc superficielle est supérieur ou égal à 1,0.

5. Pneumatique selon l'une quelconque des revendications 1 à 4,
   dans lequel la couche de caoutchouc superficielle contient de la silice en une quantité Sc de 30 parties en masse ou plus pour 100 parties en masse du composant en caoutchouc.

6. Pneumatique selon l'une quelconque des revendications 1 à 5,
   dans lequel la couche de caoutchouc interne contenant un matériau à base de lignine comprend de la silice.

7. Pneumatique selon l'une quelconque des revendications 1 à 6,
   dans lequel le rapport Lc/Lb est compris entre 5,0 et 9,0.

8. Pneumatique selon l'une quelconque des revendications 1 à 7,
   dans lequel la couche de caoutchouc superficielle contient un plastifiant en une quantité comprise entre 18 et 45 parties en masse pour 100 parties en masse du composant en caoutchouc.

9. Pneumatique selon l'une quelconque des revendications 1 à 8,
   dans lequel une quantité de plastifiants dans la couche de caoutchouc interne contenant un matériau à base de lignine est de 5 parties en masse ou moins pour 100 parties en masse du composant en caoutchouc.

10. Pneumatique selon l'une quelconque des revendications 1 à 9,
    dans lequel la couche de caoutchouc superficielle a une teneur en matière extractible à l'acétone AE de 15,0 % en masse ou plus, telle que déterminée selon JIS K 6229 et la description.

11. Pneumatique selon l'une quelconque des revendications 1 à 10,
    dans lequel un pourcentage d'une épaisseur totale de l'une ou plusieurs couches de caoutchouc internes est de 15 % ou plus dans une épaisseur de la partie de bande de roulement multicouche totale considérée comme 100 %.

12. Pneumatique selon l'une quelconque des revendications 1 à 11,
    dans lequel l'épaisseur Tc de la couche de caoutchouc superficielle est inférieure ou égale à 12,0 mm.

13. Pneumatique selon l'une quelconque des revendications 1 à 12,

dans lequel un rapport (Sc/Tc) entre la quantité Sc (parties en masse) de la silice pour 100 parties en masse du composant en caoutchouc dans la couche de caoutchouc superficielle et l'épaisseur Tc (mm) de la couche de caoutchouc superficielle est supérieur ou égal à 5,0.

**14.** Pneumatique selon l'une quelconque des revendications 1 à 13,
dans lequel la partie de bande de roulement multicouche comporte une rainure circonférentielle ayant une profondeur de rainure D comprise entre 5,0 et 10,0 mm.

**15.** Pneumatique selon l'une quelconque des revendications 1 à 14,
dans lequel un rapport (Lc/D) entre la quantité Lc (parties en masse) du matériau à base de lignine pour 100 parties en masse du composant en caoutchouc dans la couche de caoutchouc superficielle contenant du matériau à base de lignine et la profondeur de rainure D (mm) d'une rainure circonférentielle sur la partie de bande de roulement multicouche est compris entre 0,5 et 6,0.

**16.** Pneumatique selon l'une quelconque des revendications 1 à 15,
dans lequel un rapport (Sc/D) entre la quantité Sc (parties en masse) de la silice pour 100 parties en masse du composant en caoutchouc dans la couche de caoutchouc superficielle contenant le matériau à base de lignine et la profondeur de rainure D (mm) d'une rainure circonférentielle sur la partie de bande de roulement multicouche est compris entre 0,5 et 13,0.

FIG.1

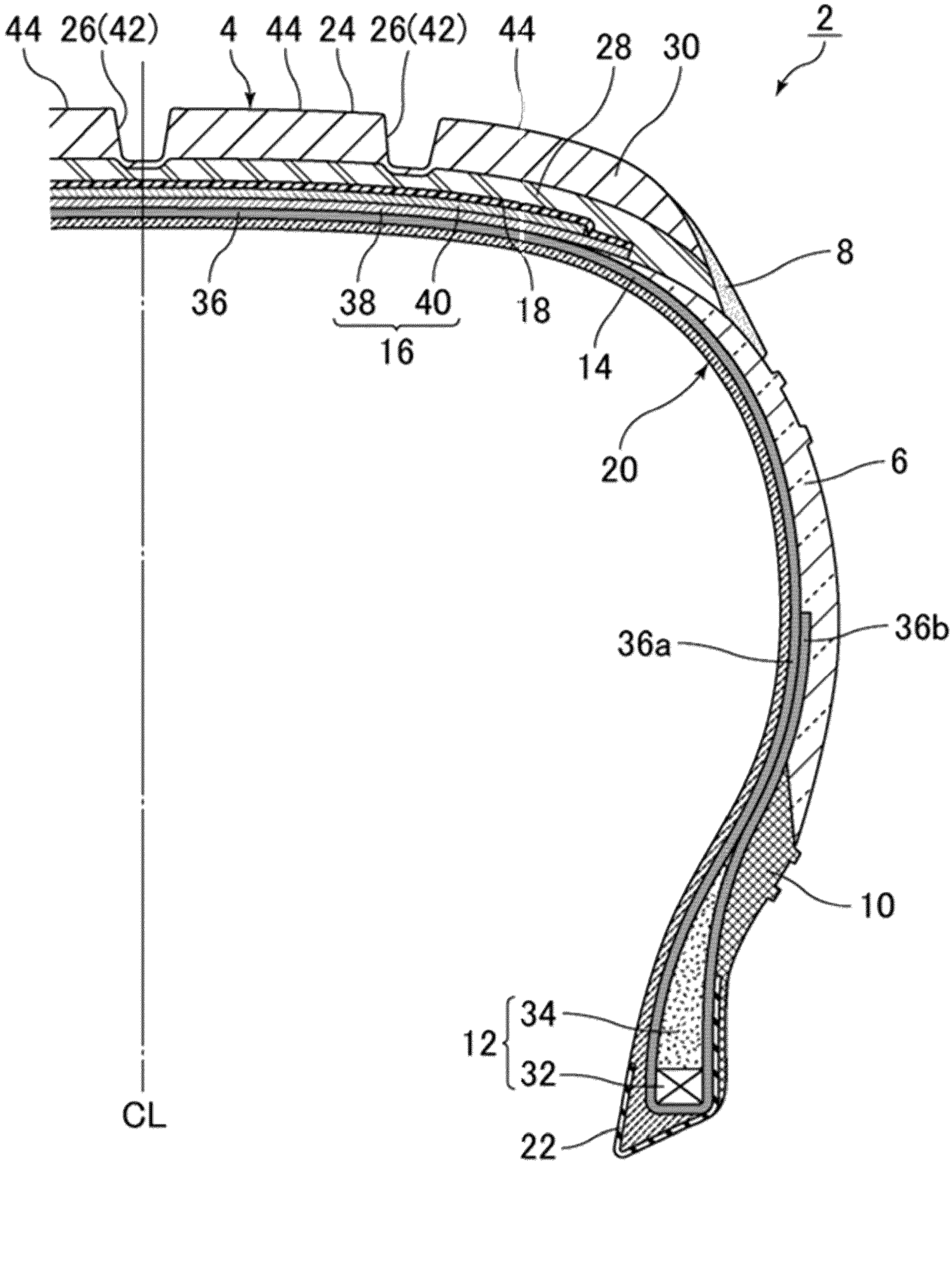
44 26(42) 4 44 24 26(42) 44
2
28 30
8
36
38 40
16
18
14
20
6
36a
36b
10
12
34
32
22
CL

FIG.2

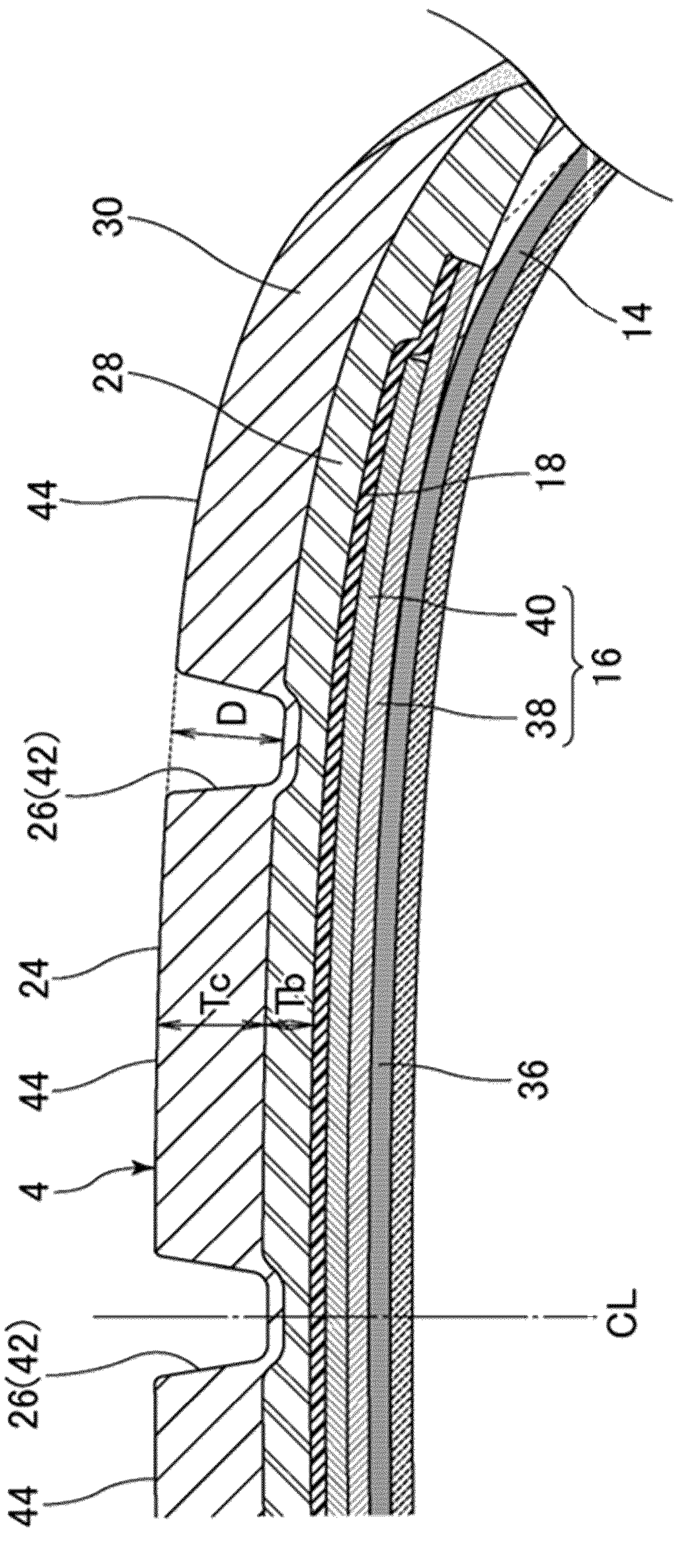

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009155199 A
- JP 6704475 B
- JP 2009002594 A


### Non-patent literature cited in the description


- Akita Prefectural University Web Journal. 2019, vol. 6, 216-222